# EUROPEAN PATENT SPECIFICATION

(11) **EP 2 278 234 B1**
(45) Date of publication and mention of the grant of the patent: **17.07.2013**
(21) Application number: 10163338.6
(22) Date of filing: 19.05.2010
(51) Int. Cl.: F24H 1/26, F24H 8/00, F24H 9/00, F28F 3/02, F28F 7/02

(54) **Heat exchanger particularly suitable for condensation boilers**
Wärmetauscher, insbesondere für Brennwertkessel
Échangeur de chaleur, notamment pour chaudière à condensation

(30) Priority: 30.06.2009 IT VI20090158
(43) Date of publication of application: 26.01.2011
(73) Proprietor: Zanforlin, Stefano, 36061 Bassano del Grappa (VI) (IT); Cestaro, Chiara, Monticello Conte Otto (VI) (IT); Cestaro, Luca, Monticello Conte Otto (VI) (IT)
(72) Inventor: Zanforlin Stafano, 36061 Bassano del Grappa (VI) (IT)
(74) Representative: Bonini, Ercole

(56) References cited:
- EP-A1- 0 687 870
- EP-A1- 0 794 392
- EP-A1- 1 703 244
- EP-A2- 0 618 410
- EP-A2- 1 136 764
- EP-A2- 1 813 881
- WO-A2-2009/003817
- US-A1- 2008 110 416

## Description

The present invention concerns a heat exchanger particularly suited to be used in condensation boilers.

As is known, heat exchangers for condensation boilers must comply with particularly strict compactness and efficiency requirements.

In order to meet said requirements, a heat exchanger of known type generally comprises a tubular jacket that internally defines a first duct for the outflow of the hot gases produced by a burner.

The heat exchanger also comprises a second duct for the passage of water, generally obtained within the thickness of the tubular jacket and characterized by a helical configuration.

A plurality of pins is also provided, said pins generally having a circular cross section and projecting from the inner surface of the tubular jacket towards the inside of the first duct.

In particular, the pins are arranged in staggered rows that project from two opposite sides of the tubular jacket towards the inside of the first duct.

Each pin developing on one side of the tubular jacket corresponds to a pin located on the other side, the two pins having their respective ends facing towards the central area of the first duct.

The above mentioned pins force the hot gas to follow a tortuous path and capture the heat of the hot gas to transfer it by conduction to the walls of the duct and therefore to the water that flows around the duct itself.

The heat exchangers of the type described above are generally obtained by sand casting of a metal, preferably aluminium or another metal with analogous conductivity and/or weight.

Due to technological reasons connected to said sand casting process, the pins must have a progressively decreasing section from the periphery towards the centre of the duct, and furthermore the mutually facing ends of the pins must be slightly spaced from each other, thus defining an intermediate space.

The above mentioned configuration poses the drawback that the above mentioned intermediate spaces define a preferential path through which part of the gas tends to flow, exchanging a reduced quantity of heat with the pins themselves.

In the attempt to limit this drawback, without however succeeding in eliminating it completely, the pins are made in different lengths, so as to misalign the spaces between the respective ends and thus make the above mentioned path tortuous. An example of this kind of heat exchangers is diclosed in EP 1136764 or US 2008/0110416.

The drawback described above is worsened by the fact that the cross section of the pins decreases towards the centre of the duct, which determines a lateral distance between the pins and therefore a section for the passage of the gas that is larger at the centre of the duct than at the sides of the same. Obviously, since the central area of the first duct is the one that is furthest from the second duct, in which the water flows, the fact that the gas flow is larger in the above mentioned central area limits the heat exchange efficiency of the heat exchanger. An example of a heat exchanger according to the preamble of the claim 1 is known from WO 2009/003817.

It is the object of the present invention to provide a heat exchanger whose efficiency is higher than the efficiency of the heat exchangers of known type described above.

This object is achieved by a heat exchanger carried out according to the main claim.

Further details of the heat exchanger that is the subject of the invention are provided in the corresponding dependent claims.

The above mentioned object and the advantages specified below are illustrated in greater detail in the description of a preferred embodiment of the invention, provided as a non-limiting example with reference to the attached drawings, wherein:
- Figure 1 shows an axonometric view of the heat exchanger constructed according to the invention;
- Figure 2 shows the heat exchanger of Figure 1 in partial cross section, so that it is possible to see also its internal part;
- Figure 3 shows the heat exchanger of Figure 1, cross-sectioned along plane III-III;
- Figure 4 shows a construction variant of the heat exchanger of the invention.

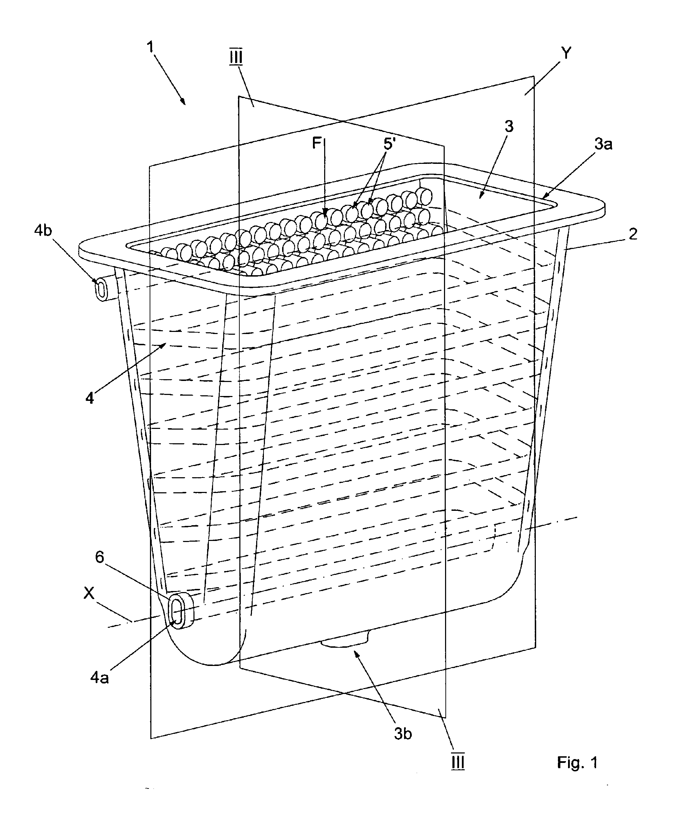

The heat exchanger that is the subject of the invention is illustrated in Figure 1, where it is indicated as a whole by **1.**

The heat exchanger **1** comprises a tubular jacket **2** that internally delimits a first duct **3** developing between an inlet section **3a** and an outlet section 3b that define an outflow direction **F** of a first fluid along the first duct **3**.

The first fluid is preferably but not necessarily a hot gas produced by a burner arranged at the level of the inlet section **3a** of the first duct **3**, not represented but known per se.

The section of the first duct **3** preferably has a decreasing surface area from the inlet section **3a** towards the outlet section **3b**, so that the gas flows along the first duct **3** at an almost constant speed, notwithstanding the increase in its density caused by its progressive cooling along the path.

The heat exchanger **1** comprises also a second duct **4**, mainly developing outside the first duct **3** and shown with a broken line in Figure 1, suitable for the passage of a second fluid that is preferably water.

The second duct **4** is preferably but not necessarily obtained within the thickness of the tubular jacket **2**, to the advantage of the simplicity of construction and the compactness of the heat exchanger **1**.

The second duct **4**, which develops between an inlet mouth **4a** and an outlet mouth **4b**, is arranged in thermal contact with the tubular jacket **2**. The cross section of the second duct **4** can be constant or variable, in such a way as to obtain a prefixed trend in the speed of the fluid along the second duct **4** in relation to the effectiveness of the heat exchange desired in each area of the second duct **4**.

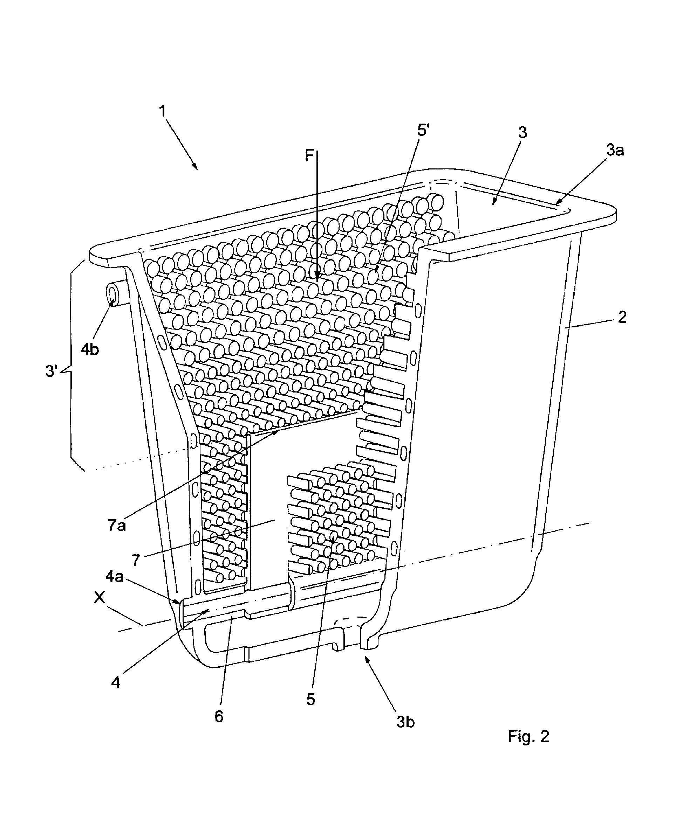

As shown in greater detail in the partial section plane of Figure 2, the heat exchanger **1** comprises a plurality of heat exchange elements **5** and **5'** projecting from the tubular jacket **2** towards the inside of the first duct **3**.

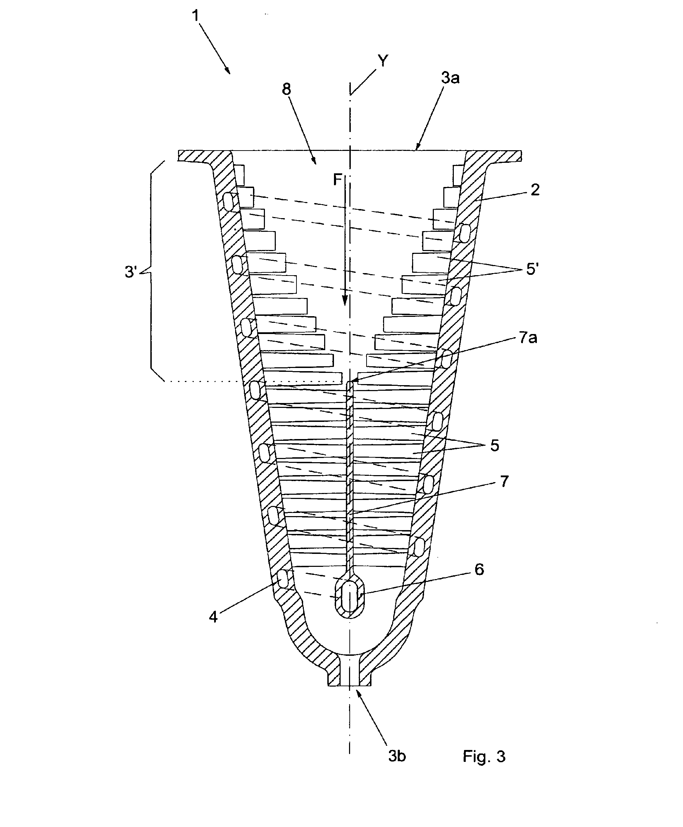

As shown in Figures 2 and 3, the heat exchanger **1** comprises also a laminar body **7** arranged in the first duct **3**, substantially parallel to the outflow direction **F** of the first fluid and in thermal contact with one or more heat exchange elements **5**.

The laminar body **7** is preferably arranged in proximity to the outlet section **3b** of the first duct **3** and extends towards its inlet section **3a**.

The above mentioned laminar body **7** serves as a further heat exchange element with the fluid contained in the central area of the first duct **3**, transferring the heat of the first fluid by conduction to the tubular jacket **2** and therefore to the second fluid.

Therefore, the laminar body **7** advantageously makes it possible to increase the quantity of heat exchanged between the two fluids, in such a way as to achieve the object of the invention.

The laminar body **7** is preferably arranged at the level of a longitudinal plane of symmetry **Y** of the first duct **3**.

In this way, advantageously, the laminar body **7** makes the fluid flow nearer to the side walls of the first duct **3*,*** thus avoiding the tendency of the first fluid to gather in the central area.

The above mentioned advantage is particularly important when the laminar body **7** is interposed in the space that, in the heat exchangers of known type, is usually included between the mutually facing ends of the heat exchange elements **5**.

In fact, in this case, the presence of the laminar body **7** prevents part of the first fluid from flowing through the above mentioned spaces towards the outlet section **3b** without transferring heat to the heat exchange elements **5**.

At the same time, advantageously, the laminar body **7** makes it possible to trap the heat of the first fluid present in the central area of the first duct **3** which, being the furthest away from the side walls in contact with the second fluid, is the one that is usually less exploited for the purposes of the heat exchange.

It can therefore be understood that said laminar body **7** advantageously makes it possible to increase the efficiency of the heat exchanger **1** compared to the heat exchangers of known type that are not equipped with it.

The second duct **4** preferably comprises a tubular body **6** arranged inside the first duct **3** and in proximity to its outlet section **3b**.

The tubular body **6** makes it possible to recover the residual heat contained in the hot gas, in the point where its temperature is the lowest, before the gas leaves the heat exchanger **1**.

It is thus possible to take a greater quantity of heat from the hot gas compared to the quantity allowed by the heat exchangers of known type, thus contributing to the object of increasing the overall efficiency of the heat exchange.

The tubular body **6** preferably constitutes the final section of the second duct **4** at the level of the inlet mouth **4a**.

In the above mentioned end section of the second duct **4**, the second fluid presents the condition of minimum temperature, advantageously making it possible to optimize the heat exchange with the first fluid.

In other words, a countercurrent heat exchange takes place between the two fluids, said countercurrent heat exchange offering, as is known, maximum efficiency with all the other conditions remaining the same.

The tubular body **6** is preferably arranged with its longitudinal axis **X** orthogonal with respect to the outflow direction **F** of the first fluid. Advantageously, with the above mentioned orientation, the tubular body **6** can be arranged in the point that is nearest to the outlet section **3b** for its entire development, thus maximizing the above mentioned countercurrent configuration.

Furthermore, as shown in Figure 3, the longitudinal axis **X** of the tubular body **6** is preferably arranged on the above mentioned longitudinal plane of symmetry **Y** of the first duct **3**, where the first fluid is hotter.

Therefore, advantageously, there is a greater difference in temperature between the two fluids, which further favours the heat exchange. Furthermore, advantageously, the above mentioned configuration causes the first fluid to come uniformly into contact with the entire surface of the tubular body **6**, to the advantage of the heat exchange efficiency.

The tubular body **6** is preferably but not necessarily provided with a finned external surface, not illustrated in the figures but known per se. Advantageously, said finned surface increases the heat exchange surface between the tubular body **6** and the first fluid, thus increasing the overall efficiency of the heat exchanger **1**.

Obviously, the tubular body **6** can also be provided with an internal finned surface, in order to increase the efficiency of the heat exchange with the second fluid.

The tubular body **6** is preferably in thermal contact with the laminar body **7** that constitutes a projection thereof.

Consequently, part of the heat recovered from the laminar body **7** is transferred directly to the second fluid in the point where it is colder, to further advantage of the overall efficiency of the heat exchange.

As far as the heat exchange elements **5**, **5'** are concerned, they preferably have an elongated shape, in fact they develop according to respective longitudinal development axes preferably having a circular cross section.

It is clear that in construction variants of the invention not illustrated herein the cross section of the heat exchange elements **5**, **5'** can be other than circular, for example semi-circular, oval or drop-shaped.

In any case, the heat exchange elements **5**, **5'** preferably but not necessarily feature a wider cross section in the areas of the first duct **3** where the temperature is higher, in order to allow the heat to be dispersed more effectively and to avoid overheating.

The above mentioned heat exchange elements **5**, **5'** are preferably arranged orthogonal to the outflow direction **F** of the first fluid, in order to limit their length, to the advantage of the heat transmission efficiency, as well as to simplify the structure of the heat exchanger **1.**

For analogous reasons, the heat exchange elements **5, 5'** are preferably parallel to each other and orthogonal to the laminar body **7**.

Preferably, and as shown in particular in Figure 3, in the inlet portion **3'** of the first duct **3** included between the inlet section **3a** and the end of the laminar body **7** there are shortened heat exchange elements **5'.**

More precisely, the above mentioned shortened elements **5'** do not protrude so far as to reach the centre of the first duct **3,** but stop before reaching it. Therefore, the ends of the above mentioned shortened elements **5'** define an intermediate empty space **8** at the level of the central area of the first duct **3,** suited to serve as a combustion chamber for the production of hot gas.

The above mentioned empty space **8** preferably features a triangular profile whose cross section is maximum at the level of the inlet section **3a** of the first duct **3** and decreases progressively until becoming equal to zero at the level of the end of the laminar body **7**, where the ends of the heat exchange elements **5'** come into contact with the laminar body **7** itself.

According to a construction variant not illustrated herein, the laminar body **7** does not extend until the margin of the empty space **8** mentioned above but is shorter.

Consequently, this construction variant comprises some heat exchange elements **5** that do not join the laminar body **7**, since the respective longitudinal axes do not intersect it.

The above mentioned heat exchange elements **5** are preferably prolonged until the opposite wall of the tubular jacket **2**, so as to cross the whole section of the first duct **3**.

Since the prolonged heat exchange elements are not interrupted at the height of the centre of the first duct **3**, they advantageously make it possible to avoid the creation of a preferential path in the central area of the first duct **3**, as is the case with the heat exchangers of known type.

A further advantage offered by the prolonged elements is connected to the already mentioned technological requirements according to which the heat exchange elements must have a progressively decreasing cross section from the surface of the tubular jacket **2** to the centre of the duct **3.**

As already seen, due to the above mentioned requirements, the heat exchange elements of the known art become progressively thinner from the periphery of the first duct towards its centre, with a corresponding increase of their mutual lateral distance and therefore of the section through which the first fluid passes.

On the contrary, the prolonged elements can alternatively become thinner in opposite directions, so that the lateral distance between two adjacent elements remains substantially constant.

In this way, advantageously, the section through which the first fluid passes remains substantially constant through the entire section of the first duct **3.**

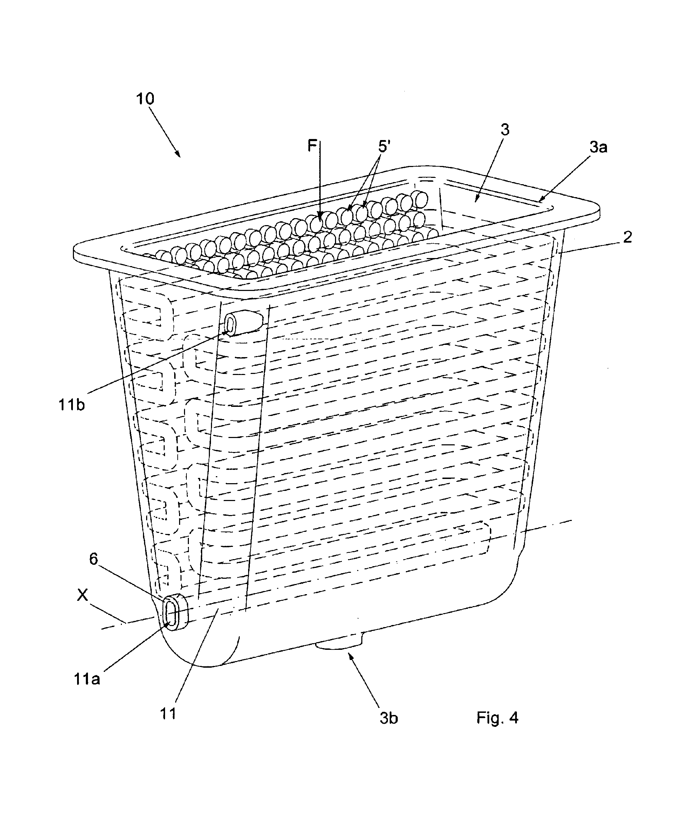

As shown in Figure 1, the second duct **4** preferably has a helical configuration, so that the second fluid meets the minimum resistance during its outflow and at the same time comes into contact with all the sides of the tubular jacket **2.** Figure 4 represents a construction variant of the heat exchanger, indicated as a whole by **10,** in which the only difference compared to the heat exchanger **1** lies in the coil-shaped configuration of the second duct **11.**

The coil consists of various sections, each one of which preferably winds for an almost complete turn around the first duct **3** before inverting its direction and joining the successive section.

It is evident that in further construction variants of the invention, not illustrated herein, the second duct can have any configuration different from the two described above, provided that it is such as to allow the heat exchange to take place between the second fluid and the tubular jacket **2.**

Preferably but not necessarily the tubular body **6,** the tubular jacket **2** and the heat exchange elements **5** and **5'** are carried out as a monobloc body, for example through a sand casting process.

In this way, advantageously, the heat exchanger **1** is obtained through a single casting cycle, thus simplifying the production process and therefore reducing the cost of the heat exchanger **1** compared to the heat exchangers of known type suitable for analogous uses.

The casting is generally made in aluminium, even if in construction variants of the invention any other heat conductive material can be used, in particular metals having thermal and mechanical characteristics analogous to those of aluminium.

According to a construction variant of the invention, not represented herein, the portion of the tubular jacket **2** near the outlet section **3b** of the first duct **3** is carried out separately from the rest of the heat exchanger **1**, to which it is connected successively.

The above mentioned variant is used, for example, when the removal of the above mentioned portion is desirable in order to facilitate access to the inside of the tubular jacket **2** by a maintenance operator.

In practice, the heat exchanger **1** described above is associated with a burner arranged at the level of the inlet section **3a** of the first duct **3**, not represented herein but known per se.

The flame produced by the burner develops at the level of the empty space 8 included between the shortened heat exchange elements **5'** and produces a hot gas that constitutes the above mentioned first fluid.

The hot gas flows through the first duct **3** towards the outlet section **3b,** coming into contact with the heat exchange elements **5**, **5'** and with the laminar body **7**, to which it transfers part of its heat.

The heat recovered in this way is transmitted by convection respectively to the tubular jacket **2** and the tubular body **6** and, successively, to the second fluid that flows in the second duct **4** and that, as already said, is preferably water. As the hot gas proceeds towards the outlet section **3b** of the first duct **3**, its temperature decreases until when, in proximity to the outlet section **3b**, it comes into contact with the surface of the tubular body **6**, transferring further heat to the second fluid in the initial part of the second duct **4**, before definitively leaving the first duct **3**.

Obviously, the above analogously applies to the construction variant of the heat exchanger **10**.

The above clearly shows that the heat exchanger that is the subject of the invention achieves the set object.

In fact, it makes it possible to obtain a more effective heat exchange between the first fluid and the second fluid compared to that ensured by the heat exchangers of known type.

On implementation, the heat exchanger that is the subject of the invention may undergo further changes that, though not illustrated in the drawings or described herein, shall nonetheless be covered by the present patent, provided that they come within the scope of the claims that follow.

Where technical features mentioned in any claim are followed by reference signs, those reference sings have been included for the sole purpose of increasing the intelligibility of the claims and accordingly such reference signs do not have any limiting effect on the protection of each element identified by way of example by such reference signs.

## Claims

1. Heat exchanger (1; 10), particularly suitable for use in condensation boilers, comprising:
- a tubular jacket (2) internally delimiting a first duct (3) developed between an inlet section (3a) and an outlet section (3b) that define an outflow direction (F) for a first fluid;
- a second duct (4; 11) arranged in thermal contact with said tubular jacket (2) and developed mainly outside said first duct (3) between an inlet mouth (4a; 11 a) and an outlet mouth (4b; 11 b) for the passage of a second fluid;
- a plurality of elongated heat exchange elements (5, 5') projecting from said tubular jacket (2) towards the inside of said first duct (3) according to respective longitudinal development axes;
- a laminar body (7) arranged in said first duct (3) substantially parallel to said outflow direction (F);
exchange elements (5, 5') and is in thermal contact with a plurality of said heat exchange elements (5).

2. Heat exchanger (1; 10) according to claim 1), **characterized in that** an inlet portion (3') of said first duct (3) included between said inlet section (3a) and the end (7a) of said laminar body (7) is provided with shortened heat exchange elements (5') in order to define an empty space (8) suited to serve as a combustion chamber in said inlet portion (3').

3. Heat exchanger (1; 10) according to claim 2), **characterized in that** said inlet portion (3') is provided with one or more heat exchange elements (5) extending from one wall of said tubular jacket (2) to the other.

4. Heat exchanger (1; 10) according to any one of the preceding claims, **characterized in that** said laminar body (7) is arranged at the level of a longitudinal plane of symmetry (Y) of said first duct (3).

5. Heat exchanger (1; 10) according to any one of the preceding claims, **characterized in that** said laminar body (7) is arranged in proximity to said outlet section (3b).

6. Heat exchanger (1; 10) according to any one of the preceding claims, **characterized in that** said second duct (4; 11) comprises a tubular body (6) arranged inside said first duct (3) in proximity to said outlet section (3b).

7. Heat exchanger (1; 10) according to claim 6), **characterized in that** said tubular body (6) corresponds to the terminal section of said second duct (4; 11) near said inlet mouth (4a; 11 a).

8. Heat exchanger (1; 10) according to claim 6) or 7), **characterized in that** the longitudinal axis (X) of said tubular body (6) is arranged crosswise in relation to said outflow direction (F).

9. Heat exchanger (1; 10) according to claim 8), **characterized in that** the longitudinal axis (X) of said tubular body (6) is arranged on a longitudinal plane of symmetry (Y) of said first duct (3).

10. Heat exchanger (1; 10) according to any one of the preceding claims, **characterized in that** each one of said heat exchange elements (5, 5') has circular cross section along said longitudinal development axis.

11. Heat exchanger (1; 10) according to claim 10), **characterized in that** said heat exchange elements (5, 5') are arranged with the corresponding longitudinal axes orthogonal to said outflow direction (F).

12. Heat exchanger (1) according to any one of the preceding claims, **characterized in that** said second duct (4) has a helical configuration.

13. Heat exchanger (10) according to any one of claims from 1) to 11), **characterized in that** said second duct (11) has a coil-shaped configuration.

14. Heat exchanger (1; 10) according to any one of the preceding claims, **characterized in that** said tubular body (6), said tubular jacket (2) and said heat exchange elements (5, 5') belong to a monobloc body.

## Patentansprüche

1. Wärmetauscher (1; 10), insbesondere für den Gebrauch in Kondensationsboilern geeignet, Folgendes umfassend:
- eine röhrenförmige Ummantelung (2), die intern eine erste Leitung (3) umgrenzt, welche zwischen einem Zulaufabschnitt (3a) und einem Auslassabschnitt (3b) verläuft, welche eine Ablaufrichtung (F) für ein erstes Medium definieren;
- eine zweite Leitung (4; 11), die in thermischem Kontakt mit der besagten, röhrenförmigen Ummantelung (2) angeordnet ist und überwiegend außerhalb der besagten, ersten Leitung (3) zwischen einer Einlassöffnung (4a; 11a) und einer Auslassöffnung (4b; 11 b) für den Durchfluss eines zweiten Mediums verläuft;
- eine Vielzahl länglicher Wärmetauscherelemente (5, 5'), die gemäß entsprechender Längsachsen aus der besagten, röhrenförmigen Ummantelung (2) in das Innere der besagten, ersten Leitung (3) ragen;
- einen in der besagten, ersten Leitung (3) angeordneten, dünnen Körper (7), der im Wesentlichen parallel zur besagten Ablaufrichtung (F) steht;
**dadurch gekennzeichnet, dass** der besagte, dünne Körper (7) orthogonal zu den besagten Wärmetauscherelementen (5, 5') ist und in thermischem Kontakt mit einer Vielzahl der besagten Wärmetauscherelementen (5) steht.

2. Wärmetauscher (1; 10) gemäß Patentanspruch 1), **dadurch gekennzeichnet, dass** ein Einlassbereich (3') der besagten ersten Leitung (3), zwischen den besagten Zulaufabschnitt (3a) und dem Ende (7a) des besagten, dünnen Körpers (7) verkürzte Wärmetauscherelemente (5') aufweist, um einen leeren Raum (8) zu bilden, der geeignet ist, als Verbrennungskammer in dem besagten Einlassbereich (3') zu dienen.

3. Wärmetauscher (1; 10) gemäß Patentanspruch 2), **dadurch gekennzeichnet, dass** der besagte Einlassbereich (3') mit einem oder mehreren Wärmetauscherelementen (5) versehen ist, welche sich von einer Wand bis an die andere Wand der besagten, röhrenförmigen Ummantelung (2) erstrecken.

4. Wärmetauscher (1; 10) gemäß eines jeden der vorstehenden Patentansprüche, **dadurch gekennzeichnet, dass** der besagte, dünne Körper (7) auf einer Längssymmetrieebene (Y) der besagten, ersten Leitung (3) angeordnet ist.

5. Wärmetauscher (1; 10) gemäß eines jeden der vorstehenden Patentansprüche, **dadurch gekennzeichnet, dass** der besagte, dünne Körper (7) in der Nähe des besagten Auslassabschnitts (3b) angeordnet ist.

6. Wärmetauscher (1; 10) gemäß eines jeden der vorstehenden Patentansprüche, **dadurch gekennzeichnet, dass** die besagte, zweite Leitung (4; 11) einen röhrenförmigen Körper (6) umfasst, der in der Nähe des besagten Auslassabschnitts (3b) innerhalb der besagten ersten Leitung (3) angeordnet ist.

7. Wärmetauscher (1; 10) gemäß Patentanspruch 6), **dadurch gekennzeichnet, dass** der besagte röhrenförmige Körper (6) dem Endbereich der besagten zweiten Leitung (4; 11) nahe der besagten Einlassöffnung (4a; 11a) entspricht.

8. Wärmetauscher (1; 10) gemäß Patentanspruch 6) oder 7), **dadurch gekennzeichnet, dass** die Längsachse (X) des besagten röhrenförmigen Körpers (6) quer zur besagten Ablaufrichtung (F) angeordnet ist.

9. Wärmetauscher (1; 10) gemäß Patentanspruch 8), **dadurch gekennzeichnet, dass** die Längsachse (X) des besagten röhrenförmigen Körpers (6) auf einer Längssymmetrieebene (Y) der besagten, ersten Leitung (3) angeordnet ist.

10. Wärmetauscher (1; 10) gemäß eines jeden der vorstehenden Patentansprüche, **dadurch gekennzeichnet, dass** jedes der besagten Wärmetauscherelemente (5, 5') einen kreisförmigen Querschnitt entlang der besagten Längsachse hat.

11. Wärmetauscher (1; 10) gemäß Patentanspruch 10), **dadurch gekennzeichnet, dass** die besagten Wärmetauscherelemente (5, 5') mit den entsprechenden Längsachsen orthogonal zu der besagten Ablaufrichtung (F) angeordnet sind.

12. Wärmetauscher (1) gemäß eines jeden der vorstehenden Patentansprüche, **dadurch gekennzeichnet, dass** die besagte, zweite Leitung (4) eine schraubenförmige Konfiguration aufweist.

13. Wärmetauscher (10) gemäß eines jeden der vorstehenden Patentansprüche von 1) a 11), **dadurch gekennzeichnet, dass** die besagte, zweite Leitung (11) eine gewundene Konfiguration aufweist.

14. Wärmetauscher (1; 10) gemäß eines jeden der vorstehenden Patentansprüche, **dadurch gekennzeichnet, dass** der besagte, röhrenförmige Körper (6), die besagte röhrenförmige Ummantelung (2) und die besagten Wärmetauscherelemente (5, 5') zu einem einteiligen Körper gehören.

## Revendications

1. Echangeur de chaleur (1; 10), particulièrement indiqué pour être employé en chaudières à condensation, comprenant:
- une chemise tubulaire (2) délimitant à l'intérieur un premier conduit (3) développé entre une section d'entrée (3a) et une section de sortie (3b) qui définissent une direction d'écoulement (F) pour un premier fluide;
- un deuxième conduit (4; 11) mis en contact thermique avec ladite chemise tubulaire (2) et développé principalement à l'extérieur dudit premier conduit (3) entre une bouche d'entrée (4a; 11 a) et une bouche de sortie (4b; 11 b) pour le passage d'une deuxième fluide;
- une pluralité d'éléments d'échange de chaleur allongés (5, 5') saillant de ladite chemise tubulaire (2) vers l'intérieur dudit premier conduit (3) selon des axes de développement longitudinal correspondants;
- un corps mince (7) disposé dans ledit premier conduit (3), essentiellement parallèle à ladite direction d'écoulement (F);
**caractérisé en ce que** ledit corps mince (7) est orthogonal par rapport auxdits éléments d'échange de chaleur (5, 5') et est en contact thermique avec une pluralité desdits éléments d'échange de chaleur (5).

2. Echangeur de chaleur (1; 10) selon la revendication 1), **caractérisé en ce qu'**une portion d'entrée (3') dudit premier conduit (3), comprise entre ladite section d'entrée (3a) et l'extrémité (7a) dudit corps mince (7), est dotée d'éléments d'échange de chaleur raccourcis (5') de manière à définir dans ladite portion d'entrée (3') un espace vide (8) apte à servir en tant que chambre de combustion.

3. Echangeur de chaleur (1; 10) selon la revendication 2), **caractérisé en ce que** ladite portion d'entrée (3') est dotée d'un ou plusieurs éléments d'échange de chaleur (5) s'étendant d'une paroi à l'autre de ladite chemise tubulaire (2).

4. Echangeur de chaleur (1; 10) selon l'une quelconque des revendications précédentes, **caractérisé en ce que** ledit corps mince (7) est disposé à hauteur d'un plan de symétrie longitudinal (Y) dudit premier conduit (3).

5. Echangeur de chaleur (1; 10) selon l'une quelconque des revendications précédentes, **caractérisé en ce que** ledit corps mince (7) est disposé à proximité de ladite section de sortie (3b).

6. Echangeur de chaleur (1; 10) selon l'une quelconque des revendications précédentes, **caractérisé en ce que** ledit deuxième conduit (4; 11) comprend un corps tubulaire (6) disposé à l'intérieur dudit premier conduit (3) à proximité de ladite section de sortie (3b).

7. Echangeur de chaleur (1; 10) selon la revendication 6), **caractérisé en ce que** ledit corps tubulaire (6) correspond à la partie finale dudit deuxième conduit (4; 11) près de ladite bouche d'entrée (4a; 11 a).

8. Echangeur de chaleur (1; 10) selon la revendication 6) ou 7), **caractérisé en ce que** ledit axe longitudinal (X) dudit corps tubulaire (6) est disposé transversalement par rapport à ladite direction d'écoulement (F).

9. Echangeur de chaleur (1; 10) selon la revendication 8), **caractérisé en ce que** l'axe longitudinal (X) dudit corps tubulaire (6) est disposé sur un plan de symétrie longitudinal (Y) dudit premier conduit (3).

10. Echangeur de chaleur (1; 10) selon l'une quelconque des revendications précédentes, **caractérisé en ce que** chacun desdits éléments d'échange de chaleur (5, 5') présente une section circulaire le long dudit axe de développement longitudinal.

11. Echangeur de chaleur (1; 10) selon la revendication 10), **caractérisé en ce que** lesdits éléments d'échange de chaleur (5, 5') sont disposés avec les axes longitudinaux correspondants orthogonaux à ladite direction d'écoulement (F).

12. Echangeur de chaleur (1) selon l'une quelconque des revendications précédentes, **caractérisé en ce que** ledit deuxième conduit (4) présente une configuration hélicoïdale.

13. Echangeur de chaleur (10) selon l'une quelconque des revendications de 1) à 11), **caractérisé en ce que** ledit deuxième conduit (11) présente une configuration en serpentin.

14. Echangeur de chaleur (1; 10) selon l'une quelconque des revendications précédentes, **caractérisé en ce que** ledit corps tubulaire (6), ladite chemise tubulaire (2) et lesdits éléments d'échange de chaleur (5, 5') appartiennent à un corps monobloc.
